(19)

Europäisches
Patentamt
European
Patent Office
Office européen
des brevets

(11) **EP 2 905 919 A1**

(12) **EUROPEAN PATENT APPLICATION**

(43) Date of publication:
**12.08.2015 Bulletin 2015/33**

(21) Application number: **14154504.6**

(22) Date of filing: **10.02.2014**

(51) Int Cl.:
**H04L 5/00** (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Nokia Solutions and Networks Oy
02610 Espoo (FI)**

(72) Inventors:
• **Chmiel, Mieszko
53-441 Wroclaw (PL)**
• **Angelow, Iwajlo
Atlanta, 30342 (US)**
• **Vasenkari, Petri
20250 Turku (FI)**

(54) **Selection of carrier spacing in carrier aggregation**

(57)    A method comprising selecting for a user equipment a first carrier aggregation option in dependence of information about carrier aggregation channel spacing capability for that user equipment and causing said selected option to be used.

Figure 6

**Description**

This disclosure relates to methods and apparatus and, in particular but not exclusively, to method and apparatus for controlling data transmissions in a communication network.

A communication system can be seen as a facility that enables communication sessions between two or more nodes such as fixed or mobile devices, machine-type terminals, access nodes such as base stations, servers and so on. A communication system and compatible communicating entities typically operate in accordance with a given standard or specification which sets out what the various entities associated with the system are permitted to do and how that should be achieved. For example, the standards, specifications and related protocols can define the manner how devices shall communicate, how various aspects of communications shall be implemented and how devices for use in the system shall be configured.

A user can access the communication system by means of an appropriate communication device. A communication device of a user is often referred to as user equipment (UE) or terminal. A communication device is provided with an appropriate signal receiving and transmitting arrangement for enabling communications with other parties. Typically a device such as a user equipment is used for enabling receiving and transmission of communications such as speech and content data.

Communications can be carried on wireless carriers. Examples of wireless systems include public land mobile networks (PLMN) such as cellular networks, satellite based communication systems and different wireless local networks, for example wireless local area networks (WLAN). In wireless systems a communication device provides a transceiver station that can communicate with another communication device such as e.g. a base station of an access network and/or another user equipment. The two directions of communications between a base station and communication devices of users have been conventionally referred to as downlink and uplink. Downlink (DL) can be understood as the direction from the base station to the communication device and uplink (UL) the direction from the communication device to the base station.

According to an aspect, there is provided a method comprising selecting for a user equipment a first carrier aggregation option in dependence of information about carrier aggregation channel spacing capability for that user equipment, and causing said selected option to be used.

The first carrier aggregation option may comprise having a first channel spacing.

Causing said selected option to be used may comprise causing selecting at least one second channel at the first channel spacing from a first channel.

The first channel spacing may be one of a plurality of channel spacings.

The first channel spacing may be less than a maximum channel spacing and greater than or equal to a minimum channel spacing.

The first channel spacing may be less than a nominal channel spacing.

The first channel spacing may be a multiple of 300 kHz less than the nominal channel spacing such that there is no overlap between the first and second channel.

The method may comprise selecting a carrier aggregation channel combination.

The carrier aggregation channel spacing capability information may comprise information for the selected channel aggregation channel combination.

The method may comprise selecting a second carrier aggregation option in dependence of information about carrier aggregation capability for that user equipment and causing said selected option to be used, wherein said second option is a second channel spacing which is greater than the first channel spacing.

The method may comprise receiving said information from the user equipment.

The method may comprise receiving information as radio resource control signalling.

The method may comprise determining said information based on a network configuration.

The information may be associated with a pair of base stations.

According to another aspect there is provided an apparatus, said apparatus comprising at least one processor and at least one memory including computer code for one or more programs, the at least one memory and the computer code configured, with the at least one processor, to cause the apparatus at least to select for a user equipment a first carrier aggregation option in dependence of information about carrier aggregation channel spacing capability for that user equipment and cause said selected option to be used.

The first carrier aggregation option may comprise having a first channel spacing.

The at least one processor and at least one memory may be configured to select at least one second channel at the first channel spacing from a first channel.

The first channel spacing may be one of a plurality of channel spacings.

The first channel spacing may be less than a maximum channel spacing and greater than or equal to a minimum channel spacing.

The first channel spacing may be less than a nominal channel spacing.

The first channel spacing may be a multiple of 300 kHz less than the nominal channel spacing such that there is no overlap between the first and second channel.

The at least one processor and at least one memory may be configured to select a carrier aggregation channel combination.

The carrier aggregation channel spacing capability information may comprise information for the selected channel aggregation channel combination.

The at least one processor and at least one memory may be configured to select a second carrier aggregation option in dependence of information about carrier aggregation capability for that user equipment and causing said selected option to be used, wherein said second option is a second channel spacing which is greater than the first channel spacing.

The at least one processor and at least one memory may be configured to receive said information from the user equipment.

The at least one processor and at least one memory may be configured to receive information as radio resource control signalling.

The at least one processor and at least one memory may be configured to determine said information based on a network configuration.

The information may be associated with a pair of base stations.

According to another aspect, there is provided an apparatus comprising means for selecting for a user equipment a first carrier aggregation option in dependence of information about carrier aggregation channel spacing capability for that user equipment, and causing said selected option to be used.

The first carrier aggregation option may comprise having a first channel spacing.

The means for causing said selected option to be used may comprise means for selecting at least one second channel at the first channel spacing from a first channel.

The first channel spacing may be one of a plurality of channel spacings.

The first channel spacing may be less than a maximum channel spacing and greater than or equal to a minimum channel spacing.

The first channel spacing may be less than a nominal channel spacing.

The first channel spacing may be a multiple of 300 kHz less than the nominal channel spacing such that there is no overlap between the first and second channel.

The apparatus may comprise means for selecting a carrier aggregation channel combination.

The carrier aggregation channel spacing capability information may comprise information for the selected channel aggregation channel combination.

The apparatus may comprise means for selecting a second carrier aggregation option in dependence of information about carrier aggregation capability for that user equipment and causing said selected option to be used, wherein said second option is a second channel spacing which is greater than the first channel spacing.

The apparatus may comprise means for receiving said information from the user equipment.

The at least one processor and at least one memory may be configured to receive information as radio resource control signalling.

The apparatus may comprise means for determining said information based on a network configuration.

The information may be associated with a pair of base stations.

A computer program comprising program code means adapted to perform the method(s) may also be provided. The computer program may be stored and/or otherwise embodied by means of a carrier medium.

Figure 1 shows a schematic diagram of a communication system comprising a base station and a plurality of communication devices;

Figure 2 shows a schematic diagram of a mobile communication device according to some embodiments;

Figure 3 shows a schematic diagram of a control apparatus according to some embodiments;

Figure 4 shows a schematic diagram of aggregated carriers in a frequency band;

Figure 5 shows a method of distinguishing user equipment capability;

Figure 6 shows a schematic diagram of a aggregated carriers in a frequency band.

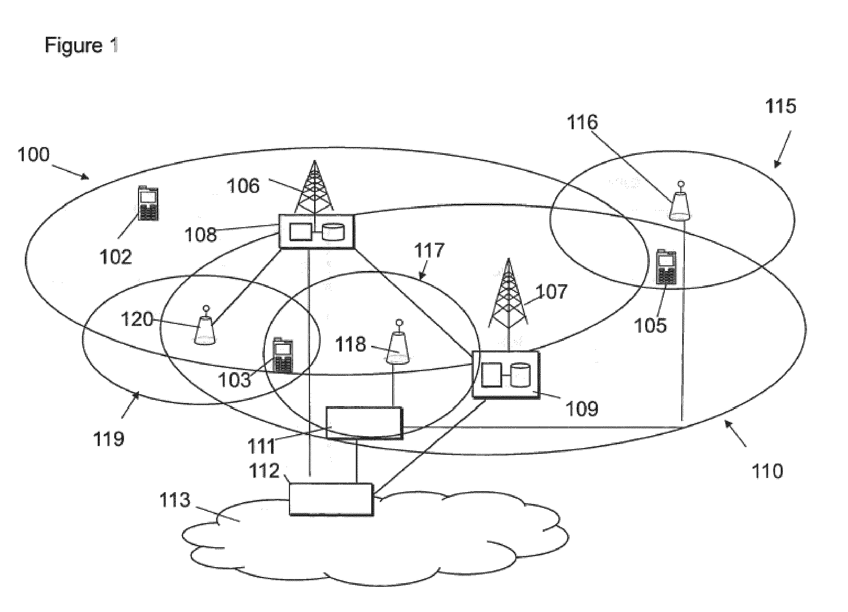

In the following certain exemplifying embodiments are explained with reference to a wireless or mobile communication system serving mobile communication devices. Before explaining in detail the exemplifying embodiments, certain general principles of a wireless communication system and mobile communication devices are briefly explained with reference to Figures 1 to 3 to assist in understanding the technology underlying the described examples.

In a wireless communication system 100 mobile communication devices or user equipment (UE) 102, 103, 105 are provided wireless access via at least one base station or similar wireless transmitting and/or receiving node or point. Base stations are typically controlled by at least one appropriate controller apparatus, so as to enable operation thereof and management of mobile communication devices in communication with the base stations. Base stations may comprise base band pools. The controller apparatus may be part of the base station and/or provided by a separate entity such as a Radio Network Controller. In Figure 1 control apparatus 108 and 109 are shown to control the respective macro base stations 106 and 107. The control apparatus of a base station can be interconnected with other control entities. The control apparatus is typically provided with memory capacity and at least one data processor. The control apparatus and functions may be distributed between a plurality of control units. In some systems, the control apparatus may additionally or alternatively be provided in a radio network controller.

In Figure 1 base stations 106 and 107 are shown as connected to a wider communications network 113 via gateway 112. A further gateway function may be provided to connect to another network.

The smaller base stations 116, 118 and 120 may also be connected to the network 113, for example by a separate gateway function and/or via the controllers of the macro stations. In the example, stations 116 and 118 are connected via a gateway 111 whilst station 120 connects via the controller apparatus 108. In some embodiments, the smaller stations may not be provided.

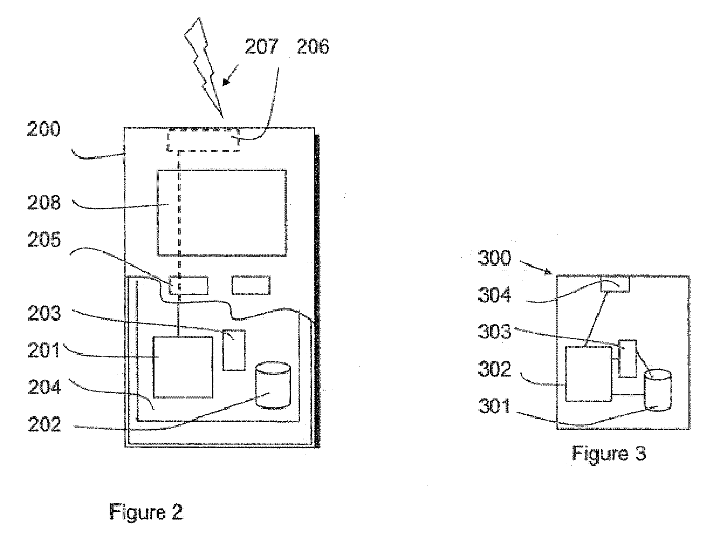

A possible mobile communication device will now be described in more detail with reference to Figure 2 showing a schematic, partially sectioned view of a communication device 200. Such a communication device is often referred to as user equipment (UE) or terminal. An appropriate mobile communication device may be provided by any device capable of sending and receiving radio signals. Non-limiting examples include a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services include two-way or multi-way calls, data communication or multimedia services or simply an access to a data communications network system, such as the Internet. Users may also be provided broadcast or multicast data. Non-limiting examples of the content include downloads, television and radio programs, videos, advertisements, various alerts and other information.

The mobile device 200 may receive signals over an air or radio interface 207 via appropriate apparatus for receiving and may transmit signals via appropriate apparatus for transmitting radio signals. In Figure 2 transceiver apparatus is designated schematically by block 206. The transceiver apparatus 206 may be provided for example by means of a radio part and associated antenna arrangement. The antenna arrangement may be arranged internally or externally to the mobile device.

A mobile device is typically provided with at least one data processing entity 201, at least one memory 202 and other possible components 203 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 204. The user may control the operation of the mobile device by means of a suitable user interface such as key pad 205, voice commands, touch sensitive screen or pad, combinations thereof or the like. A display 208, a speaker and a microphone can be also provided. Furthermore, a mobile communication device may comprise appropriate connectors (either wired or wireless) to other devices and/or for connecting external accessories, for example hands-free equipment, thereto.

The communication devices 102, 103, 105 may access the communication system based on various access techniques, such as code division multiple access (CDMA), or wideband CDMA (WCDMA). Other non-limiting examples comprise time division multiple access (TDMA), frequency division multiple access (FDMA) and various schemes thereof such as the interleaved frequency division multiple access (IFDMA), single carrier frequency division multiple access (SC-FDMA) and orthogonal frequency division multiple access (OFDMA), space division multiple access (SDMA) and so on.

An example of wireless communication systems are architectures standardized by the 3rd Generation Partnership Project (3GPP). A latest 3GPP based development is often referred to as the long term evolution (LTE) of the Universal Mobile Telecommunications System (UMTS) radio-access technology. The various development stages of the 3GPP specifications are referred to as releases. More recent developments of the LTE are often referred to as LTE Advanced (LTE-A). The LTE employs a mobile architecture known as the Evolved Universal Terrestrial Radio Access Network (E-UTRAN). Base stations of such systems are known as evolved or enhanced Node Bs (eNBs) and provide E-UTRAN features such as user plane Radio Link Control/Medium Access Control/Physical layer protocol (RLC/MAC/PHY) and control plane Radio Resource Control (RRC) protocol terminations towards the communication devices. Other examples of radio access system include those provided by base stations of systems that are based on technologies such as wireless local area network (WLAN) and/or WiMax (Worldwide Interoperability for Microwave Access).

LTE systems may be considered to have a so-called "flat" architecture, without the provision of RNCs; rather the (e)NB is in communication with a system architecture evolution gateway (SAE-GW) and a mobility management entity (MME), which entities may also be pooled meaning that a plurality of these nodes may serve a plurality (set) of (e)NBs. Each UE is served by only one MME and/or S-GW at a time and the (e)NB keeps track of current association. SAE-GW is a "high-level" user plane core network element in LTE, which may consist of the S-GW and the P-GW (serving gateway and packet data network gateway, respectively). The functionalities of the S-GW and P-GW may be separated and they are not required to be co-located.

Figure 3 shows an example of a control apparatus for a communication system, for example to be coupled to and/or for controlling a station of an access system, such as a base station. In some embodiments, base stations comprise a separate control apparatus. In other embodiments, the control apparatus can be another network element such as a radio network controller. In some embodiments, each base station may have such a control apparatus as well as a control apparatus being provided in a radio network controller. The control apparatus 109 can be arranged to provide control on communications in the service area of the system. The control apparatus 109 comprises at least one memory 301, at least one data processing unit 302, 303 and an input/output interface 304. Via the interface the control apparatus can be coupled to a receiver and a transmitter of the base station. For example the control apparatus 109 can be configured to execute an appropriate software code to provide the control functions which allow communication between the base stations.

Carrier aggregation (CA) may be used to increase the bandwidth in LTE-A. When carriers are aggregated, each carrier may be referred to as a Component Carrier (CC). These carriers or channels may be in contiguous or non-contiguous elements of the spectrum in same band, or they may be in different bands. The main carrier is known as the Primary CC 410. The configuration of the Primary CC 410 may be terminal specific and may be determined according to the loading on the various carriers as well as other relevant parameters. The Primary CC 410 may be cell specific. Secondary CCs 420 may be added and removed as required, whereas the Primary CC 410 may be changed only at handover.

The spacing between carriers will depend on the deployment scenario, the size of the frequency block available and the channel bandwidths. The nominal channel spacing between two adjacent E-UTRA carriers is defined as the following:

$$Nominal\ Channel\ spacing = \left( BW_{Channel(1)} + BW_{Channel(2)} \right)/2$$

where $BW_{Channel(1)}$ and $BW_{Channel(2)}$ are the channel bandwidths of the two respective E-UTRA carriers. For contiguous intraband CA Bandwidth Class C, the nominal channel spacing between two adjacent E-UTRA component carriers is defined as the following:

$$Nominal\ Channel\ spacing$$
$$= \left\lfloor \frac{BW_{Channel(1)} + BW_{Channel(2)} - 0.1 \left| BW_{Channel(1)} - BW_{Channel(2)} \right|}{0.6} \right\rfloor 0.3 [MHz]$$

An improvement of spectral efficiency in a particular deployment scenario may be achieved by reducing channel spacing by a multiple of 300kHz ,so long as the CCs are not overlapping each other, to obtain a minimum channel spacing,.

Operators which have limited spectrum to use CA with nominal spacing may use LTE-A systems supporting intra-band CA with channel spacing other than the nominal channel spacing, by reducing the nominal channel spacing by a multiple of 300kHz. A plurality of alternative channel spacings is available between the nominal channel spacing and the smallest channel spacing before the carriers overlap. The smallest channel spacing before the carriers overlap may be referred to as a minimum channel spacing. However, not all user equipments (UEs) will support both nominal and minimum channel spacing. Spacing other than the nominal spacing is optional for UEs in the RAN4 specification and may not be supported by a particular UE. Some chipsets may be designed such that they do not support the minimum spacing.

If an operator system deploys a network with the minimum channel spacing, there may be a situation where a terminal which does not support minimum spacing, such as a legacy UE, tries to connect to the first network and utilise CA. The operator network would have CCs located closer to each other in comparison to the nominal channel spacing scenario. If the UE tries to connect to the network, the UE would not be able to use CA because the RRC (Radio Resource Controller) SCell (Secondary Cell) addition would be wrong. The addition of the Secondary CC would not be accepted by the UE because it is not in line with the UE's capabilities. The RRC Scell addition with a non-supported carrier spacing may lead to an RRC Connection Re-establishment followed by another incorrect RRC SCell addition.

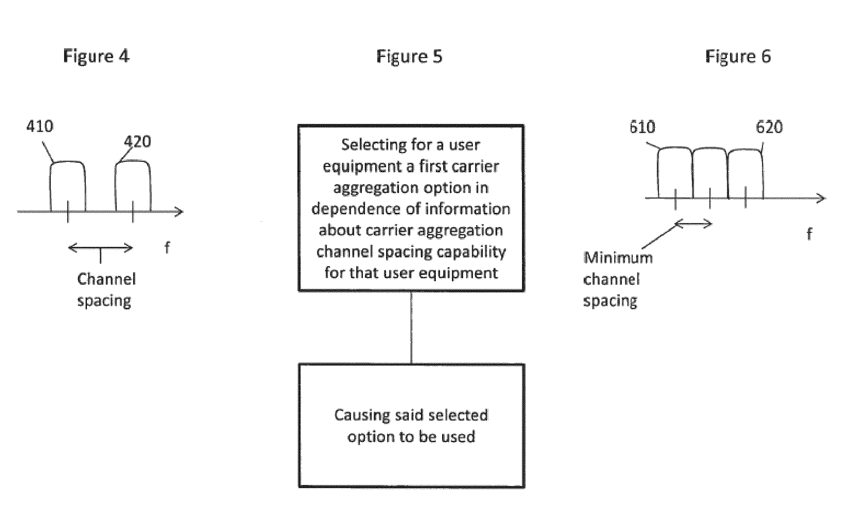

Figure 5 shows a method allowing a network to be able to distinguish, for each supported band combination, if a given terminal supports only nominal channel spacing or other channel spacing. A control apparatus, such as that shown, in figure 3, may carry out the method. The control apparatus may be positioned in a base station or a higher network entity.

The terminal, or UE, may signal to the network its CA channel spacing capability. The signalling may be implemented as RRC signalling. The signalling may be sent together with existing UE capability signalling about supported CA combinations. The signalling can list each supported channel spacing per CA combination. Alternatively, or in addition, a simplified indication can be used indicating if only the nominal channel spacing or all possible channel spacings are supported by the UE in this band combination.

This signalling can be per pair of cells in case of band combinations with more than two cells, i.e. for interband combinations where this is more than one CC component aggregated in each band. The signalling can be omitted when not needed, e.g. for inter-band band combinations or inter-band cell pairs.

Consistent UE-eNB behaviour regarding CA configuration may be achieved. Interruptions and/or call drops for UEs supporting only the nominal channel spacing can be reduced.

As shown in figure 6, there is the possibility to utilize intra-band non-contiguous CA for UEs supporting only the nominal channel spacing when the network supports at least three Component Carriers. If the operator is using three (or more) CCs with minimum channel spacing, a UE which does not support minimum channel spacing may still utilise intra-band non-contiguous CA using the outermost CCs 610 and 620 as the spacing between these will be larger than the nominal spacing.

Alternatively, RAN4 specification can define, per each band combination, the set of channel spacing (whether the nominal channel spacing or alternative minimum channel spacings) that must be supported by the UE.

The required data processing apparatus and functions of a base station apparatus, a communication device, and any other appropriate apparatus may be provided by means of one or more data processors. The described functions may be provided by one or more processors or by an integrated processor. The data processors may be of any type suitable to the local technical environment, and may include one or more of general purpose computers, special purpose computers, microprocessors, digital signal processors (DSPs), application specific integrated circuits (ASIC), gate level circuits and processors based on multi core processor architecture, as non-limiting examples. The data processing may be distributed across several data processing modules. A data processor may be provided by means of, for example, at least one chip. Appropriate memory capacity can also be provided in the relevant devices. The memory or memories may be of any type suitable to the local technical environment and may be implemented using any suitable data storage technology, such as semiconductor based memory devices, magnetic memory devices and systems, optical memory devices and systems, fixed memory and removable memory. In general, the various embodiments may be implemented in hardware or special purpose circuits, software, logic or any combination thereof.

Some aspects of the invention may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof. The software may be stored on such physical media as memory chips, or memory blocks implemented within the processor, magnetic media such as hard disk or floppy disks, and optical media such as for example DVD and the data variants thereof, CD.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims. Indeed there is a further embodiment comprising a combination of one or more of any of the other embodiments previously discussed.

**Claims**

1. A method comprising:

   selecting for a user equipment a first carrier aggregation option in dependence of information about carrier aggregation channel spacing capability for that user equipment; and
   causing said selected option to be used.

2. A method according to claim 1, wherein the first carrier aggregation option comprises having a first channel spacing.

3. A method according to claim 2, wherein causing said selected option to be used comprises: causing selecting at least one second channel at the first channel spacing from a first channel.

4. A method according to claim 2 or claim 3, wherein the first channel spacing is one of a plurality of channel spacings.

5. A method according to any one of claims 2 to 4, wherein the first channel spacing is less than a maximum channel spacing and greater than or equal to a minimum channel spacing.

6. A method according to any one of claims 2 to 5, wherein the first channel spacing is less than a nominal channel spacing.

7. A method according to claim 6, wherein the first channel spacing is a multiple of 300 kHz less than the nominal channel spacing such that there is no overlap between the first and second channel.

8. A method according to claim 1, comprising selecting a carrier aggregation channel combination.

9. A method according to claim 8, wherein the carrier aggregation channel spacing capability information comprises information for the selected channel aggregation channel combination.

10. A method according to any of the preceding claims, comprising selecting a second carrier aggregation option in dependence of information about carrier aggregation capability for that user equipment ; and
    causing said selected option to be used, wherein said second option is a second channel spacing which is greater than the first channel spacing.

11. A method according to any of the preceding claims, comprising receiving said information from the user equipment.

12. A method according to any of the preceding claims, comprising receiving information as radio resource control signalling.

13. A method according to any one of claims 1 to 10, comprising determining said information based on a network configuration.

14. A method according to any of the preceding claims, wherein the information is associated with a pair of base stations.

15. An apparatus, said apparatus comprising at least one processor and at least one memory including computer code for one or more programs, the at least one memory and the computer code configured, with the at least one processor, to cause the apparatus at least to:

    select for a user equipment a first carrier aggregation option in dependence of information about carrier aggregation channel spacing capability for that user equipment; and
    cause said selected option to be used.

16. An apparatus according to claim 15, wherein the first carrier aggregation option comprises having a first channel spacing.

17. An apparatus according to claim 16, at least one memory and the computer code are configured to select at least one second channel at the first channel spacing from a first channel.

**18.** An apparatus according to claim 16 or claim 17, wherein the first channel spacing is one of a plurality of channel spacings.

**19.** An apparatus according to any one of claims 16 to 18, wherein the first channel spacing is less than a maximum channel spacing and greater than or equal to a minimum channel spacing.

**20.** An apparatus according to any one of claims 16 to 19, wherein the first channel spacing is less than a nominal channel spacing.

**21.** An apparatus according to claim 20, wherein the first channel spacing is a multiple of 300 kHz less than the nominal channel spacing such that there is no overlap between the first and second channel.

**22.** An apparatus according to any of claims 15 to 21, wherein the at least one memory and the computer code are configured to receive said information from the user equipment.

**23.** An apparatus according to any of claims 15 to 22, wherein the at least one memory and the computer code are configured to receive information as radio resource control signalling.

**24.** An apparatus according to any one of claims 15 to 21, wherein the at least one memory and the computer code are configured to determine said information based on a network configuration.

**25.** A computer program comprising computer executable instructions which when run are configured to perform the method of any one of claims 1 to 14.

Figure 1

Figure 3

Figure 2

## Figure 4

410
420

Channel
spacing

f

## Figure 5

Selecting for a user
equipment a first carrier
aggregation option in
dependence of information
about carrier aggregation
channel spacing capability
for that user equipment

Causing said selected
option to be used

## Figure 6

610
620

Minimum
channel
spacing

f

EP 2 905 919 A1

Europäisches
Patentamt

European
Patent Office

Office européen
des brevets

**EUROPEAN SEARCH REPORT**

Application Number

EP 14 15 4504

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/070149 A1 (ERICSSON TELEFON AB L M [SE]; KAZMI MUHAMMAD [SE]; LARSSON MAGNUS [SE]) 16 May 2013 (2013-05-16) * page 13, line 20 - page 28, line 26 * ----- | 1-25 | INV. H04L5/00 |
| A | ERICSSON ET AL: "On carrier spacing for NC CA", 3GPP DRAFT; R4-116037, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. San Francisco, USA; 20111114 - 20111118, 7 November 2011 (2011-11-07), XP050567359, [retrieved on 2011-11-07] * Section 2 * ----- | 1-25 | |
| A | "3rd Generation Partnership Project; Technical Specification Group Radio Access Network; Evolved Universal Terrestrial Radio Access (E-UTRA); Base Station (BS) radio transmission and reception (Release 12)", 3GPP STANDARD; 3GPP TS 36.104, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. V12.2.0, 6 January 2014 (2014-01-06), pages 1-149, XP050729292, [retrieved on 2014-01-06] * Section 5.7 * ----- | 1-25 | TECHNICAL FIELDS SEARCHED (IPC) H04L |

The present search report has been drawn up for all claims

| Place of search | Date of completion of the search | Examiner |
|---|---|---|
| The Hague | 19 June 2014 | Skraparlis, D |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                 EP 14 15 4504

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2014

| Patent document cited in search report | Publication date | Patent family member(s) | Publication date |
|---|---|---|---|
| WO 2013070149 A1 | 16-05-2013 | US 2014161052 A1<br>WO 2013070149 A1 | 12-06-2014<br>16-05-2013 |

EPO FORM P0459

For more details about this annex : see Official Journal of the European Patent Office, No. 12/82